# DEMANDE DE BREVET EUROPEEN

(11) **EP 4 793 909 A1**
(43) Date de publication de la demande: **19.08.2026**
(21) Numéro de dépôt: 26155934.8
(22) Date de dépôt: 03.02.2026
(51) Int. Cl.: G06V 20/70, G06V 10/26, G06V 10/774

(54) **METHODE DE DECOUVERTE AUTOMATIQUE DE SOUS-CONCEPTS SEMANTIQUES DANS UNE SCENE**

(30) Priorité: 18.02.2025 FR 2501675
(71) Demandeur: Commissariat à l'Énergie Atomique et aux Énergies Alternatives, 75015 Paris (FR)
(72) Inventeur: PETIT, Doriand, 91191 Gif sur Yvette CEDEX (FR); BOURGEOIS, Steve, 91191 Gif sur Yvette CEDEX (FR); GAY BELLILE, Vincent, 91191 Gif sur Yvette CEDEX (FR); CHABOT, Florian, 91191 Gif sur Yvette CEDEX (FR)
(74) Mandataire: Atout PI Laplace

(57) **Abrégé**

Méthode, mise en œuvre par ordinateur, de découverte automatique de sous-concepts sémantiques dans une scène, la méthode comprenant les étapes de :
- Recevoir (301) un ensemble de données représentant au moins une scène,
- Recevoir (302) au moins une requête définissant au moins un concept sémantique à rechercher dans l'au moins une scène,
- Recevoir (307) une représentation desdites données dans un premier espace de représentation commun aux données et à l'au moins une requête,
- Pour chaque requête, déterminer (305), dans le premier espace de représentation commun, une première segmentation de l'au moins une scène supervisée à partir de l'au moins un concept sémantique de manière à définir au moins un segment non pertinent comprenant les données n'appartenant pas au concept sémantique,
- Entrainer (306) un projecteur à transformer (303) les données dudit ensemble vers un second espace de représentation sémantique de manière à réaliser une seconde segmentation des données vers un ensemble de plusieurs segments comprenant l'au moins un segment non pertinent et plusieurs segments définissant des sous-concepts de l'au moins un concept sémantique,
- L'entrainement du projecteur pour l'au moins un segment comprenant les données n'appartenant pas au concept sémantique étant réalisé de façon supervisée à partir de la première segmentation.

## Description

L'invention concerne le domaine de la découverte d'objets dans une ou plusieurs scène(s) à l'aide de méthodes de segmentation automatique impliquant des modèles d'intelligence artificielle.

De façon générale, l'invention concerne le domaine de la découverte automatique de concepts sémantiques ou de la segmentation sémantique d'une ou plusieurs scène(s). La segmentation sémantique vise à décomposer une scène en régions spatiales ayant un même sens sémantique. La scène peut consister en une représentation en 3D ou un ensemble d'images 2D. Plusieurs scènes peuvent être considérées ou plusieurs images 2D d'une même scène.

Plus précisément, l'invention vise à proposer une méthode de découverte automatique de sous-concepts sémantiques relatifs à un concept sémantique fourni par un utilisateur via une requête. Un sous-concept sémantique désigne un élément particulier appartenant à une catégorie plus générale correspondant à un concept sémantique.

Par exemple, si le concept sémantique correspond à la catégorie des meubles, des sous-concepts sémantiques incluent les chaises, les tables, les lits et tout type de meuble.

Le tableau suivant donne différents exemples de concepts sémantiques et des exemples (non limitatifs) de sous-concepts sémantiques associés.

| Concept sémantique | Sous-concepts associés |
|---|---|
| Meubles | Chaise, sofa, table, banc, lit, bureau, étagère |
| Dispositifs électroniques | Télévision, écran, téléphone, tablette, caméra |
| Décoration | Tableau, plante, vase, livre, bougie, |
| Art | Vase, tableau, sculpture |

La segmentation sémantique consiste à décomposer au moins une scène, représentée à l'aide d'une collection d'images 2D ou de modèles de représentation 3D, en un ensemble de régions partageant une même sémantique.

Cela permet d'obtenir une représentation de plus haut niveau d'une scène, pouvant être utilisée pour différentes tâches de vision par ordinateur telles que la découverte d'objets particuliers dans une scène pour des applications de robotique ou d'inventaire de scènes ou encore des tâches d'annotation, d'analyse d'une scène 3D, de suivi d'avancement d'un chantier, de détection d'anomalies ou encore de guidage d'un opérateur.

Le problème visé par l'invention consiste à développer une méthode de segmentation sémantique permettant une décomposition de la scène la plus pertinente possible vis-à-vis d'une requête renseignée par un utilisateur mais aussi du contenu de la scène, sans nécessiter de données annotées.

Ainsi, un objectif de l'invention est de permettre une découverte de sous-concepts appartenant à une classe sémantique définie par une requête utilisateur mais aussi de réaliser une segmentation de la scène en sous-concepts du concept sémantique associé à la requête. Typiquement, les concepts et sous-concepts sémantiques peuvent définir des classes d'objets ou d'autres éléments ayant un même sens sémantique.

En effet, lorsqu'une décomposition comprend des classes sémantiques qui sont sans rapport avec la requête de l'utilisateur, elles peuvent avoir un effet distracteur pour les tâches associées à cette requête.

A l'inverse, limiter la décomposition aux seules classes sémantiques définies par la requête est bien souvent insuffisamment précis pour certaines applications ou nécessite de complexifier la requête afin de spécifier l'ensemble des sous-classes sémantiques que peut couvrir la classe sémantique générique. Par exemple, si une requête spécifie le concept sémantique « outil », on peut obtenir une décomposition d'une scène dans laquelle les outils sont identifiés mais on ne saura pas différencier les types d'outils entre eux. Pour rendre la décomposition plus spécifique, il faut établir une liste exhaustive de tous les différents types d'outils ce qui en pratique peut mener à une liste quasi infinie de termes.

Ainsi, l'invention vise à fournir une méthode de découverte automatique de sous-concepts en lien avec une requête définissant un concept sémantique, par le biais d'une méthode de segmentation non supervisée, c'est-à-dire ne nécessitant pas de données d'entrainement annotées.

Différentes méthodes de l'état de l'art existent pour mettre en œuvre une segmentation sémantique d'une scène.

Un premier type de méthode, appelée segmentation sémantique en vocabulaire ouvert ([2]) vise à segmenter une scène à partir d'une requête utilisateur qui définit un concept sémantique. Ces méthodes permettent d'adapter la segmentation à une tâche cible définie par la requête sans nécessité d'annoter les données d'entrainement. Cependant, ce type de segmentation n'est pas optimal en termes de description de la scène vis-à-vis de la requête car elle ne permet pas de distinguer différents sous-concepts présents dans la scène qui sont en lien avec la requête.

Par exemple, si la requête est constituée du terme « meuble », la segmentation ne permet pas de distinguer différents types de meubles, par exemple une table et un bureau, dans la scène. Ce type d'approche ne fournit donc pas d'adaptation au contenu sémantique de la scène mais uniquement à la requête utilisateur.

Par ailleurs, ce type de segmentation n'étant pas adaptée au contenu de la scène, il reste peu précis.

Un autre type de méthode concerne la segmentation sémantique non supervisée ([3]). Cette méthode permet d'adapter la décomposition sémantique au contenu de la scène sans nécessité de disposer de données d'entrainement annotées. Cependant, cette approche ne permet pas de contrôler la pertinence des classes sémantiques sélectionnées vis-à-vis d'une requête en lien avec une tâche à réaliser ou même d'un ensemble de classes préalablement donné. En appliquant cette méthode, on obtient de nombreuses classes sémantiques qui ne sont pas forcément pertinentes vis-à-vis de l'application visée. Par ailleurs, certaines classes sémantiques pertinentes peuvent ne pas être découvertes si elles ne sont pas dominantes dans la scène.

Ainsi, ce type d'approche ne fournit pas d'adaptation à une requête utilisateur ou à une tâche donnée mais uniquement au contenu de la scène à segmenter.

Enfin, d'autres méthodes ([1]) proposent d'utiliser au préalable une décomposition de la scène en régions (par exemple à l'aide d'un détecteur d'objet) puis de décrire sémantiquement chacun de ces objets. Le résultat de cette segmentation peut ensuite être comparé à une requête afin de supprimer les régions non pertinentes vis à vis de la requête ou de fusionner des régions moyennement pertinentes pour en créer une plus pertinente. Si ce type de méthode permet à la segmentation de s'adapter à la fois à la scène et à la requête, la segmentation initiale de la scène est réalisée sans connaissance a priori de la requête. La sémantique étant dépendante du niveau de détails auquel on considère un objet (une voiture/une roue /un boulon), une décomposition agnostique à la sémantique implique un choix d'échelle et donc a un impact sur la sémantique.

La référence [4] décrit une autre méthode de segmentation sémantique supervisée d'une image. Cette méthode ne permet pas d'adapter la segmentation à une tâche spécifique définie par une requête. Par ailleurs, elle nécessite un grand nombre d'images annotées et un temps d'apprentissage conséquent.

L'invention permet de résoudre les limitations des méthodes de l'art antérieur au moyen d'une méthode de découverte d'objets dans une scène 3D qui ne nécessite pas de données annotées et qui permet à la fois de s'adapter finement au contenu sémantique de la scène et à une tâche spécifique définie par une requête utilisateur d'une ou plusieurs modalités données. Par exemple la requête peut être textuelle, visuelle, audio ou encore définir des températures de région spatiale (obtenues via une caméra thermique par exemple). La requête peut combiner plusieurs modalités. Plusieurs requêtes simultanées peuvent également être considérées, chaque requête spécifiant un concept sémantique et pouvant présenter un recouvrement sémantique partiel avec d'autres requêtes.

Par exemple, si la requête définit le concept sémantique des outils de bricolage, l'adaptation de la segmentation à la requête implique d'ignorer les zones spatiales qui ne correspondent pas à des outils de bricolage, tandis que l'adaptation de la segmentation à la scène implique de différencier les classes de segmentation relatives aux marteaux, aux tournevis et autres types d'outils présents dans la scène au lieu de fournir une seule classe plus générale relative aux outils.

L'invention permet de combiner ces deux types d'adaptation en ajustant la segmentation à la fois au contenu de la scène et au concept défini par la requête. Elle permet de décomposer la scène en sous concepts plus précis et spécifiques même lorsque la requête utilisateur défini un concept très général.

L'invention a pour objet une méthode, mise en œuvre par ordinateur, de découverte automatique de sous-concepts sémantiques dans une scène, la méthode comprenant les étapes de :
- Recevoir un ensemble de données représentant au moins une scène,
- Recevoir au moins une requête définissant au moins un concept sémantique à rechercher dans l'au moins une scène,
- Recevoir une représentation desdites données dans un premier espace de représentation commun aux données et à l'au moins une requête,
- Pour chaque requête, déterminer, dans le premier espace de représentation commun, une première segmentation de l'au moins une scène supervisée à partir de l'au moins un concept sémantique de manière à définir au moins un segment non pertinent comprenant les données n'appartenant pas au concept sémantique,
- Entrainer un projecteur à transformer les données dudit ensemble vers un second espace de représentation sémantique de manière à réaliser une seconde segmentation des données vers un ensemble de plusieurs segments comprenant l'au moins un segment non pertinent et plusieurs segments définissant des sous-concepts de l'au moins un concept sémantique,
- L'entrainement du projecteur pour l'au moins un segment comprenant les données n'appartenant pas au concept sémantique étant réalisé de façon supervisée à partir de la première segmentation.

Selon un aspect particulier de l'invention, l'entrainement du projecteur pour les segments définissant des sous-concepts est réalisé, de façon non supervisée, via l'optimisation d'une première fonction de perte définie de sorte à ce que le projecteur renforce la cohérence sémantique entre les données.

Selon un aspect particulier de l'invention, l'entrainement du projecteur pour l'au moins un segment comprenant les données n'appartenant pas au concept sémantique est réalisé via l'optimisation d'une seconde fonction de perte définie de sorte à encourager la probabilité d'appartenance audit au moins un segment en fonction de la première segmentation.

Selon une variante de réalisation, la méthode comprend en outre la détermination itérative des centroïdes de chaque segment, appelés prototypes, à partir des valeurs des données projetées dans le second espace de représentation sémantique et leurs probabilités d'appartenance à chaque segment.

Selon une variante de réalisation, la méthode comprend en outre la détermination itérative de prototypes dans le premier espace de représentation commun à partir des valeurs des données transformées dans le premier espace de représentation et leurs probabilités d'appartenance à chaque segment.

Selon une variante de réalisation, la méthode comprend une étape de conversion des prototypes déterminés dans le premier espace de représentation commun en identifiants de sous-concepts sémantiques.

Selon un aspect particulier de l'invention, la détermination itérative des centroïdes de chaque segment est réalisée au moyen des sous-étapes itératives de :
- Initialiser les valeurs des centroïdes,
- Pour un sous-ensemble des données, déterminer pour chaque donnée du sous-ensemble sa probabilité d'appartenance à chaque segment,
- Associer la donnée au segment ayant la probabilité d'appartenance la plus élevée,
- Mettre à jour la valeur des centroïdes de chaque segment à partir d'une nouvelle valeur de centroïde calculée comme la moyenne des valeurs des données appartenant audit segment, pondérées par leurs probabilités d'appartenance audit segment.

Selon un aspect particulier de l'invention, la valeur d'un centroïde d'un segment est mise à jour à partir d'une moyenne mobile exponentielle de la nouvelle valeur de centroïde.

Selon un aspect particulier de l'invention, la probabilité d'appartenance à un segment d'une donnée projetée dans le second espace de représentation sémantique est calculée à partir du produit entre la donnée projetée et la valeur du centroïde dudit segment.

Selon un aspect particulier de l'invention, le projecteur est en outre configuré pour réduire la dimension des données.

Selon un aspect particulier de l'invention, les données représentant l'au moins une scène sont sous la forme de champs neuronaux.

Selon un aspect particulier de l'invention, l'au moins une requête est définie selon au moins une modalité parmi : une modalité textuelle, visuelle, audio ou une information de température.

Selon une variante de réalisation, la méthode comprend une étape supplémentaire d'encodage des données d'entrée du projecteur dans un espace de représentation sémantique.

Selon un aspect particulier de l'invention, les données représentant au moins une scène sont sous forme de représentation 3D ou d'images 2D.

Selon un aspect particulier de l'invention, les données représentant au moins une scène comprennent en outre une information de température pour au moins une zone de la scène.

L'invention a aussi pour objet un programme d'ordinateur comportant des instructions pour l'exécution de la méthode selon l'invention, lorsque le programme est exécuté par un processeur.

L'invention a aussi pour objet un support d'enregistrement lisible par un processeur sur lequel est enregistré un programme comportant des instructions pour l'exécution de la méthode selon l'invention, lorsque le programme est exécuté par un processeur.

D'autres caractéristiques et avantages de la présente invention apparaîtront mieux à la lecture de la description qui suit en relation aux dessins annexés suivants.
[Fig. 1] représente un schéma illustrant le fonctionnement d'une méthode de découverte de sous-concepts dans au moins une scène, à partir d'une requête définissant un concept sémantique, selon un mode de réalisation de l'invention,
[Fig. 2] représente un schéma illustrant le fonctionnement d'une étape de mise à jour de prototypes selon un mode de réalisation de l'invention,
[Fig. 3] représente un organigramme détaillant les étapes de mise en œuvre d'une méthode de découverte de sous-concepts selon un mode de réalisation de l'invention.

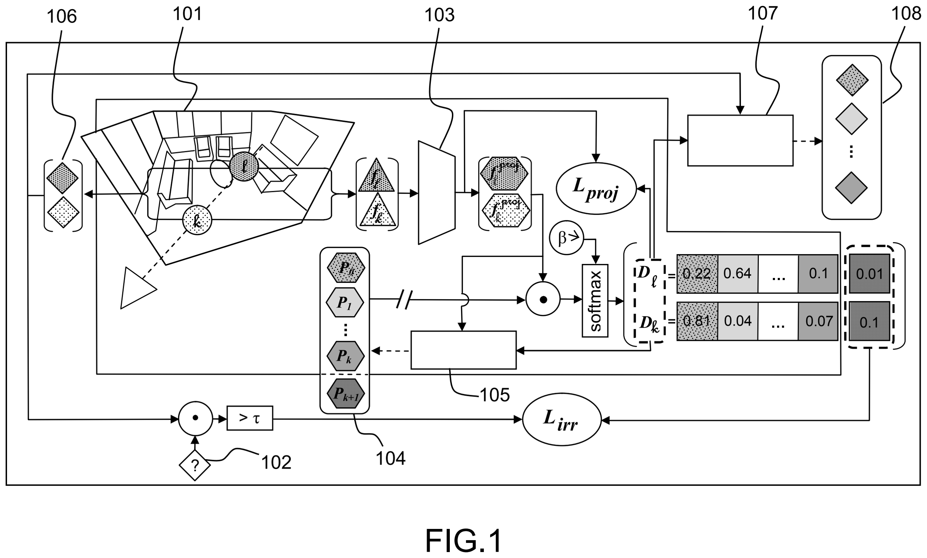

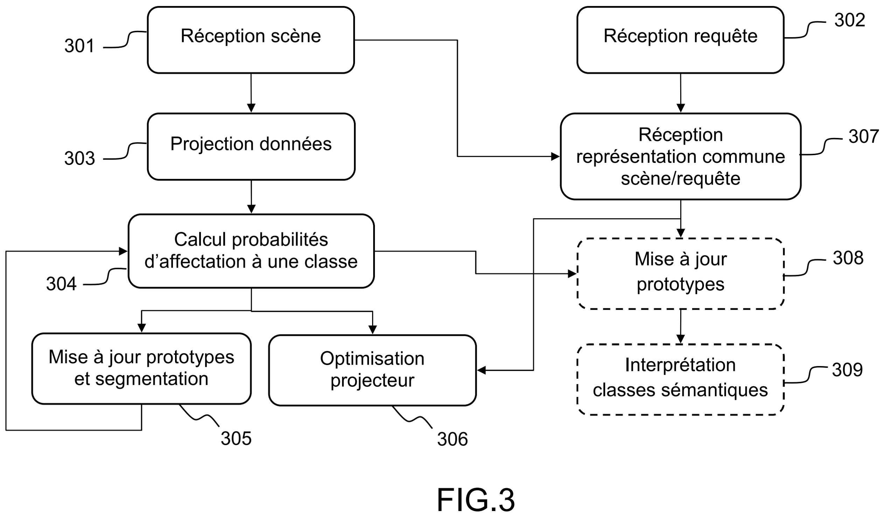

L'invention est décrite à l'appui des figures 1 et 3. La figure 1 représente un schéma synoptique illustrant le fonctionnement général de l'invention. La figure 3 est un organigramme détaillant les étapes de mise en œuvre de la méthode selon l'invention.

L'invention débute à l'étape 301 par la réception d'un ensemble de données représentant une scène. La scène est, par exemple acquise à l'aide d'une ou plusieurs caméras ou d'un ou plusieurs capteurs d'imagerie. La scène peut être en deux ou trois dimensions. Elle peut être représentée via différentes représentations. Elle peut être constituée, par exemple, d'un nuage de points ou d'un maillage ou d'un ensemble d'images 2D ou encore d'une représentation à l'aide de champs neuronaux ou « neural fields » en anglais ou encore d'une représentation de type éclaboussure gaussienne ou « Gaussian splatting » en anglais. Les champs neuronaux sont des réseaux de neurones utilisés pour modéliser de façon continue des données 3D. Des données représentant plusieurs scènes différentes peuvent être fournies à l'étape 301. Par exemple, il peut s'agit de plusieurs représentations 3D de la même scène ou de scènes différentes. Il peut aussi s'agir de différentes images 2D de la même scène ou de scènes différentes. Les données spatiales peuvent également être associées à d'autres données issues de capteurs divers. Par exemple, les données peuvent provenir d'une caméra thermique qui fournit pour chaque pixel une valeur de température.

Un type particulier de champ neuronal est le champ de radiance neuronal ou « neural radiance field (NeRF) » en anglais. Ce type de représentation vise à définir la couleur et la densité de chaque point de l'espace d'une scène de façon continue en tout point de l'espace au moyen de réseaux de neurones artificiels.

On décrit à présent un exemple particulier de la méthode dans lequel, les données en entrée sont un ensemble de données représentant une scène 3D. Chaque donnée unitaire de l'ensemble peut être un scalaire ou un vecteur et peut correspondre à un point de l'espace défini par la scène.

Sur la figure 1, on a représenté schématiquement un exemple de scène 3D 101 sur laquelle deux échantillons d'indices respectifs l et k sont représentés.

L'ensemble des échantillons représentant la scène 3D est décomposé en plusieurs sous-ensembles, typiquement de mêmes tailles, encore appelés batchs. La méthode selon l'invention fonctionne de façon itérative avec, à chaque itération, le traitement des échantillons d'un batch. Au fur et à mesure des itérations, l'entrainement du modèle est amélioré pour aboutir à la fin des itérations à la segmentation sémantique recherchée. Chaque sous-ensemble comprend des données qui peuvent être tirées aléatoirement ou non, avec ou sans remise. Les sous-ensembles peuvent ainsi être identiques ou différents à chaque itération. Dans le cas où une représentation de type NeRF est utilisée, il est possible de générer une infinité de points représentant une scène 3D, ce qui permet de générer un grand nombre de batchs pour l'entrainement de la méthode.

A l'étape 302, la méthode reçoit également en entrée, via une requête utilisateur, une information caractérisant un concept sémantique. Cette information est par exemple textuelle, mais elle peut alternativement être une représentation multimedia par exemple une image sur laquelle est illustrée le concept sémantique recherché. De façon générale, la requête peut être définie par une ou plusieurs modalités parmi une modalité textuelle, visuelle, audio ou encore une ou plusieurs températures dans le cas où les données d'entrée sont acquises au moyen d'une caméra thermique. La requête utilisateur peut comprendre plusieurs informations relatives à différents concepts sémantiques à rechercher dans la scène.

Selon un premier mode de réalisation de l'invention, la requête définit un seul concept sémantique, par exemple le concept « meubles ». Cette requête est identifiée par la référence 102 sur la figure 1.

A l'étape 303, un processus itératif démarre au cours duquel, à chaque itération les données d'un batch sont projetées dans un autre espace de représentation via un projecteur linéaire ou non linéaire 103 qui est un modèle d'intelligence artificielle entrainé via un processus d'entrainement non supervisé. Typiquement, le projecteur est entrainé pour déformer l'espace d'entrée de sorte à regrouper les données d'entrées pour les rapprocher sous forme de clusters afin de faciliter le processus de segmentation.

Le projecteur 103 est, par exemple, constitué d'une ou plusieurs couches de réseaux de neurones artificiels. Par exemple, il peut comprendre un ou plusieurs perceptrons multi-couches incluant des fonctions d'activation linéaire ou non linéaire (telle que la fonction ReLU).

Le projecteur 103 est entrainé pour projeter les données d'entrée vers un nouvel espace latent en conservant une cohérence sémantique entre deux échantillons tel que cela sera explicité plus loin.

Le projecteur 103 est ainsi entrainé à projeter les données en les regroupant par segments ou clusters de sorte à réaliser une segmentation non supervisée des données. Plus précisément, les données projetées sont agglomérées autour des centroïdes de différents clusters qui décrivent chacun une classe sémantique. Les centroïdes des clusters sont aussi appelés prototypes et sont exprimés dans le même espace de projection que les données de sortie du projecteur.

Dans une variante de réalisation représentée à la figure 1, les données d'entrée 101 sont au préalable transformées dans un espace de représentation qui permet d'encoder l'information sémantique de la scène par le biais de caractéristiques (ou « features » en anglais) qui représentent l'information sémantique pertinente dans la scène telle que la texture ou la forme globale des objets. Un exemple d'encodeur sémantique possible est un encodeur de type DINO (pour « Distillation with NON labels ») décrit dans la référence [5]. Cette variante permet de renforcer la cohérence sémantique entre deux données sémantiquement proches en entrée du projecteur et d'accélérer les traitements car les données d'entrée du projecteur présentent déjà une cohérence sémantique initiale.

Typiquement un encodeur sémantique prend en entrée des images ou des points 3D et fournit en sortie des caractéristiques ou « features » en anglais dans l'espace de représentation sémantique. D'autres types d'encodeurs sémantiques peuvent être envisagés tels que OpenSeg ([7]), SAM ([8]), Dinov2([11]), OpenScene ([12]), FeatureNERF ([13]).

Certaines informations présentes dans les données d'entrée peuvent être conservées en sortie de l'encodage sémantique. Par exemple, si une information de température est associée à chaque pixel, elle est conservée dans la représentation sémantique après encodage. Dans une autre variante de réalisation, le projecteur 103 est configuré pour réduire la dimension des données d'entrée de sorte à faciliter le processus de segmentation.

Sur la figure 1, on a représenté schématiquement le projecteur 103 opérant sur deux échantillons en entrée *fₗ* et *fₖ* pour les transformer en deux autres échantillons ${f}_{l}^{proj}$ et ${f}_{k}^{proj}$. Les échantillons en entrée et en sortie du projecteur sont des vecteurs.

Le nombre N de segments ou classes sémantiques maximal obtenus par la méthode de segmentation est un paramètre d'entrée de la méthode.

A l'étape 304, on calcule, pour chaque classe sémantique, la probabilité d'appartenance de chaque échantillon à cette classe sémantique.

Cette probabilité Dₛ pour un échantillon d'indice s est par exemple calculée en appliquant la fonction softmax au produit scalaire des données projetées ${f}_{s}^{proj}$ et des prototypes *Pᵢ* avec i variant de 1 à N. Ce produit peut être pondéré par un paramètre β.${D}_{s} = softmax \left({f}_{s}^{proj}.\frac{{P}_{i}}{β}\right) , i ϵ \left[1, N\right]$

Dₛ est un vecteur de dimension N.

Dans une variante de réalisation, la fonction softmax peut être remplacée par une normalisation des valeurs ou une fonction max ou encore des variantes de la fonction softmax telles que sparse-softmax ([14]), SM-softmax ([15]) ou Taylor-Softmax ([16]).

Dans un mode de réalisation, le paramètre β présente une valeur adaptée pour améliorer la séparation des différents clusters. Par exemple, il a une valeur comprise dans l'intervalle ]0 ;1], est initialisé à une valeur supérieure à 0.5 puis décroit linéairement au fil des itérations. Ce paramètre est utilisé pour pondérer les prototypes Pi afin de les rendre plus précis au fur et à mesure des itérations. Ce paramètre permet de progressivement augmenter la confiance du modèle dans la segmentation. Autrement dit, ce paramètre permet de controler le degré de précision de la distribution des probabilités ou « sharpness » en anglais.

Les valeurs 104 des prototypes Pᵢ sont initialisées à une valeur donnée et sont ensuite mises à jour à chaque itération via une opération de mise à jour 105,305 décrite ci-après plus en détail. La valeur initiale peut être tirée aléatoirement ou fixée au moyen d'un autre algorithme de segmentation de résolution moins précise tel qu'un algorithme de partitionnement de données du type Kmeans ([17]), DBScan ([18]) ou Optics ([19]).

Les échantillons qui ont une proximité sémantique dans les données d'entrée du projecteur conservent, voire accentuent, cette proximité dans les données de sortie du projecteur 103.

La cohérence sémantique est plus précisément conservée au niveau des distributions de probabilité des données de sortie du projecteur. Cela signifie que les distributions de probabilités restent cohérentes entre l'entrée et la sortie du projecteur.

L'étape 305 de mise à jour des prototypes permet également de réaliser la segmentation comme cela sera décrit plus loin.

Le projecteur 103 est optimisé à l'étape 306 via un algorithme de rétro-propagation du gradient à partir de la minimisation d'une fonction de cout qui vise à encourager, voire accentuer, la conservation de la cohérence sémantique entre deux échantillons.

Autrement dit, la fonction de cout choisie vise à encourager deux échantillons qui ont des valeurs proches en entrée du projecteur à avoir une probabilité d'affectation à une classe sémantique similaire en sortie du projecteur. A l'inverse, les échantillons qui sont distants en entrée du projecteur sont encouragés à avoir des probabilités d'affectation différentes.

La fonction de cout utilisée pour optimiser le projecteur est par exemple donnée par la relation suivante :${L}_{proj} = \frac{1}{m} {\sum }_{k , l}^{m} \left(\frac{{f}_{k} . {f}_{l}}{\left‖{f}_{k}\right‖ \left‖{f}_{l}\right‖}-b\right) \left(1-{D}_{k}.{D}_{l}\right)$

b est un paramètre de la fonction dont la valeur est fixée entre 0 et 1, par exemple b=0.5.

m est le nombre de paires d'échantillons du batch de données à l'itération courante.

Dₖ,Dₗ sont les probabilités d'appartenance à chaque classe sémantique des données d'entrée *fₗ* et *fₖ*. Ce sont des vecteurs de taille N.

Si *fₗ* et *fₖ* sont proches sémantiquement, le terme $\frac{{f}_{k} . {f}_{l}}{\left‖{f}_{k}\right‖ \left‖{f}_{l}\right‖}$ est supérieur à b donc le premier terme de la fonction de cout ( $\frac{{f}_{k} . {f}_{l}}{\left‖{f}_{k}\right‖ \left‖{f}_{l}\right‖} - b$) est positif. Ainsi, pour minimiser la fonction de cout, le second terme 1 *- Dₖ. Dₗ* doit tendre vers 0 et donc le produit scalaire des probabilités *Dₖ. Dₗ* doit tendre vers 1, ce qui signifie que les paramètres du projecteur sont modifiés de sorte à rapprocher les valeurs de *Dₖ et Dₗ.*

A l'inverse, si *fₗ* et *fₖ* sont éloignés sémantiquement le terme $\frac{{f}_{k} . {f}_{l}}{\left‖{f}_{k}\right‖ \left‖{f}_{l}\right‖}$ est inférieure à b donc le premier terme de la fonction de cout ( $\frac{{f}_{k} . {f}_{l}}{\left‖{f}_{k}\right‖ \left‖{f}_{l}\right‖} - b$) est négatif. Ainsi, pour minimiser la fonction de cout, le second terme 1 *- Dₖ. Dₗ* doit tendre vers la valeur la plus élevée possible et donc le produit scalaire des probabilités *Dₖ. Dₗ* doit tendre vers 0, ce qui signifie que les paramètres du projecteur sont modifiés de sorte à éloigner les valeurs de *Dₖ et Dₗ.*

Dans une variante de réalisation de l'invention, l'entrainement du projecteur via la fonction de cout *Lₚᵣₒⱼ* peut être rendu optionnel en particulier lorsque les données d'entrée du projecteur sont des données brutes qui ne sont pas converties dans un espace de représentation sémantique.

Dans une autre variante de réalisation, la transformation des données d'entrée dans un espace de représentation sémantique, couplé à l'entrainement du projecteur via la fonction de cout *Lₚᵣₒⱼ* qui renforce la cohérence sémantique de deux échantillons, permet de réaliser l'entrainement de façon plus rapide que lorsque les données d'entrée sont des données brutes (par exemple données RGB).

On décrit à présent l'étape 105 de mise à jour des prototypes.

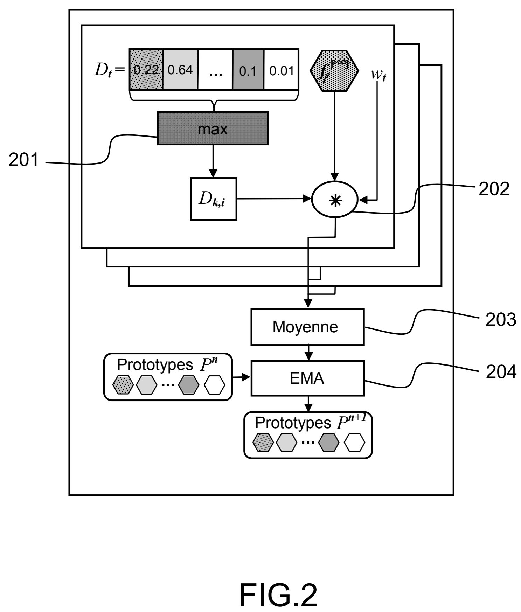

Cette étape est référencée 305 sur la figure 3 et est illustrée en détail à la figure 2.

Pour chaque échantillon indicé par l du batch d'échantillons à l'itération courante, on sélectionne (étape 201) la probabilité de valeur maximale parmi les différentes probabilités Dₗ calculées à l'étape 304 pour l'échantillon ${f}_{l}^{proj}$*.* La valeur maximale permet de définir la classe sémantique d'appartenance de l'échantillon.

On retient l'indice i de la classe sémantique correspondant à la probabilité retenue D_{l,i}. Cette étape 201 permet donc d'affecter l'échantillon ${f}_{l}^{proj}$ à une classe, autrement dit de réaliser l'opération de segmentation proprement dite.

Selon une étape optionnelle, on calcule ensuite le produit (étape 202) entre l'échantillon ${f}_{l}^{proj}$ et la probabilité D_{l,i}. Ce produit permet de pondérer la mise à jour du prototype en fonction de la confiance du modèle définie par la probabilité D_{l,i}.

A l'étape 203, on calcule une moyenne, pour chaque classe sémantique d'indice i, des produits calculés à l'étape 202.

A l'étape 204, on calcule une moyenne exponentielle mobile entre les prototypes à l'itération courante et ceux calculés à l'itération précédente.

L'équation suivante résume les calculs décrits à la figure 2.${P}_{i}^{n + 1} = α ∗ {P}_{i}^{n} + \left(1-α\right) ∗ \frac{{\sum }_{k ϵ {S}_{i}} {D}_{k , i} . {f}_{k}^{proj}}{{\sum }_{k ϵ {S}_{i}} {D}_{k , i}} , ∀ i ∈ \left[1, N\right]$

α est un coefficient dont la valeur est prise entre 0 et 1.

n est l'indice de l'itération courante.

L'étape 204 de calcul de moyenne exponentielle mobile permet de stabiliser l'apprentissage des valeurs des prototypes mais peut être optionnelle. Dans ce dernier cas, le paramètre α est pris égal à 0.

Dans un mode de réalisation particulier de l'étape 204, les produits scalaires ${D}_{k , i} . {f}_{k}^{proj}$ de la moyenne 203 sont pondérés par les densités wₖ de chaque échantillon dans leur représentation en champ neuronal. Cela permet de donner un poids plus important aux échantillons pertinents dans la représentation de la scène sous forme de champs neuronaux.

Dans un autre mode de réalisation, l'optimisation des prototypes peut être réalisée alternativement via un algorithme de rétro-propagation du gradient.

Dans encore un autre mode de réalisation, l'optimisation des prototypes est remplacée par un algorithme de partitionnement, par exemple un algorithme des K moyennes qui est appliqué pour déterminer les valeurs des centroides de chaque cluster.

Dans ce qui a été décrit jusqu'ici, on ne tient pas encore compte de la requête utilisateur 302.

Cette requête permet en outre de superviser la segmentation (via l'entrainement du projecteur) pour segmenter la scène en deux classes : une première classe d'échantillons correspondant au concept sémantique défini par la requête et une seconde classe d'échantillons ne correspondant pas à ce concept sémantique. Plus généralement, plusieurs classes correspondant au concept sémantique et plusieurs classes ne correspondant pas au concept sémantique peuvent être définies.

Pour cela, à l'étape 307, on reçoit une représentation des échantillons de la scène dans un espace de représentation commun entre les données d'entrée représentatives de la scène et la requête. Par exemple, cet espace permet de représenter de façon commune des images et du texte ou de l'audio. L'espace de représentation commun entre les données et la requête est généralement différent de l'espace de représentation sémantique qui peut être utilisé en entrée du projecteur. Cependant, dans un mode de réalisation particulier pour lequel la requête est définie uniquement par une image, les deux espaces de représentation peuvent être identiques. Ces échantillons transformés sont identifiés par la référence 106 sur la figure 1. Par exemple, l'espace de représentation commun peut être obtenu via une méthode d'encodage telle que la méthode CLIP (« Contrastive Language-Image Pretraining ») décrite dans la référence [6] ou l'une des méthodes décrites dans les références [5], [9] ou [10]

La représentation des données d'entrée dans l'espace de représentation commun peut être fournie conjointement avec les données en entrée de la méthode.

De la même façon la requête est également transformée dans l'espace commun.

En comparant les échantillons de la scène 3D avec le concept sémantique défini par la requête dans l'espace de représentation commun, on en déduit une carte de segmentation de la scène, par exemple sous la forme d'un masque binaire M_{q} dont les valeurs à 1 identifient les échantillons de la scène appartenant à la classe sémantique définie par le concept associé à la requête et les valeurs à 0 identifient les échantillons n'appartenant pas à cette classe sémantique.

Le masque binaire M_{q} est par exemple obtenu en calculant une similarité cosinus entre la représentation q de la requête dans l'espace commun et la représentation de chaque échantillon de la scène dans l'espace commun puis en comparant le résultat à un seuil permettant de binariser la similarité entre les deux représentations. Le seuil est, par exemple, fixé à une valeur a priori et est le même pour toutes les requêtes. La valeur du seuil dépend de l'espace de représentation commun.

Ensuite, on détermine une seconde fonction de cout pour superviser l'entrainement du projecteur 103. Cette seconde fonction de cout vise à entrainer le projecteur à définir au moins une classe sémantique supplémentaire qui est relative à tous les échantillons qui ne sont pas pertinents vis-à-vis du concept sémantique défini par la requête. Autrement dit, il s'agit de tous les échantillons pour lesquels le masque binaire M_{q} a une valeur à 0.

Cette fonction de cout peut être définie par la relation suivante :
${L}_{irr}^{q} = \frac{1}{# \overline{{M}_{q}}} {\sum }_{k ∉ {M}_{q}} \left({D}_{k}.{H}_{q}^{T}\right) + \frac{1}{# {M}_{q}} {\sum }_{k ∈ {M}_{q}} \left(1-{D}_{k}.{H}_{q}^{T}\right)$

H_{q} est un vecteur de sélection de dimension N_{q}+Nᵢᵣᵣ et dont les N_{q} premiers termes sont à 0 et les Nᵢᵣᵣ derniers termes sont à 1.

N_{q} est le nombre de classes sémantiques correspondant au nombre de sous-concepts associés au concept sémantique défini par la requête.

Nᵢᵣᵣ est le nombre de classes sémantiques correspondant à des échantillons non pertinents vis-à-vis de la requête. Dans un mode de réalisation particulier, Nᵢᵣᵣ est égal à 1.

#*M̅_̅{̅q̅}̅* et *#M_{q}* sont respectivement les cardinaux des ensembles *M̅_̅{̅q̅}̅ et M_{q}.*

La fonction de cout ${L}_{irr}^{q}$ vise à encourager les probabilités d'appartenance aux classes sémantiques non pertinentes vis-à-vis du concept défini par la requête à une valeur la plus élevée possible (proche de 1) pour les échantillons qui n'appartiennent pas à cette classe dans l'espace de représentation commun défini par le masque M_{q}. Inversement, les probabilités d'appartenance doivent être les plus proches de 0 pour les échantillons appartenant à la classe sémantique associée au concept défini par la requête dans l'espace commun.

De cette façon, la segmentation M_{q} définie à partir de la requête permet de superviser la segmentation réalisée par le projecteur 103 en imposant au moins une classe de segmentation pour les échantillons non pertinents vis-à-vis du concept général. De cette manière, les autres classes sémantiques sont encouragées à correspondre à différents sous-concepts pertinents vis-à-vis du concept général défini par la requête via la minimisation de la première fonction de cout. Ainsi, une cohérence sémantique est assurée pour les éléments qui correspondent au concept sémantique défini par la requête uniquement.

Ainsi, le projecteur est entrainé en minimisant la somme des fonctions de cout ${L}_{proj} + {L}_{irr}^{q}$*.*

Dans une variante de réalisation (décrite précédemment) pour laquelle la première fonction de cout *Lₚᵣₒⱼ* n'est pas utilisée, le projecteur est entrainé uniquement à partir de la seconde fonction de cout ${L}_{irr}^{q}$*.* Dans ce cas, la segmentation des données dans les classes correspondant aux sous-concepts sémantiques est réalisée directement via la mise à jour des prototypes et la sélection de la classe sémantique pour laquelle la probabilité d'appartenance de l'échantillon est la plus élevée. Le projecteur est uniquement entrainé via la fonction de cout ${L}_{irr}^{q}$ pour séparer les échantillons non pertinents vis-à-vis de la requête utilisateur dans une classe dédiée.

L'étape de segmentation est réalisée via la mise à jour 305 des prototypes en ajoutant au moins un prototype supplémentaire correspondant à la classe des échantillons non pertinents vis-à-vis de la requête.

Dans une variante de réalisation de l'invention, à l'étape 308, la méthode se poursuit en appliquant le même algorithme de mise à jour de prototypes décrit à la figure 2 mais cette fois en remplaçant les caractéristiques projetées obtenues en sortie du projecteur 103 par les échantillons 106 transformés dans l'espace commun de représentation. Les prototypes sont mis à jour à chaque itération de l'entrainement afin de déterminer les centroïdes des classes sémantiques dans l'espace commun de représentation images-texte. Ces seconds prototypes sont calculés en plus des premiers prototypes calculés à l'étape 305. Cette étape est référencée 107 sur la figure 1.

A l'étape 309, les valeurs finales des prototypes sont ensuite converties dans l'espace texte pour déterminer une interprétation (une étiquette) du sous-concept sémantique obtenu par la méthode de segmentation selon l'invention. Ces valeurs converties sont identifiées par la référence 108 sur la figure 1.

Pour cela, une première méthode possible consiste à calculer une information de similarité entre la valeur du prototype et un ensemble de valeurs calculées dans l'espace commun et provenant d'une liste de mots prédéfinies par un utilisateur. L'étiquette du sous-concept est celle du mot qui a la plus grande similarité avec le prototype dans l'espace de représentation commun.

Cette première méthode dépend cependant de la précision de la liste de mots prédéfinis par l'utilisateur. Elle présente donc l'inconvénient d'un risque d'imprécision dans le cas où le sous-concept sémantique découvert est absent de la liste de mots prédéfinis.

Une seconde méthode possible est proposée pour pallier cet inconvénient. Les valeurs des prototypes obtenues à l'étape 308 sont projetées dans un espace de tokens visuels d'un modèle multimodal vision-langage ou VLM en anglais.

Dans le contexte d'un modèle multimodal vision-langage, un token est une représentation vectorielle abstraite et structurée représentant soit un élément de texte (token textuel) soit une région d'une image (token visuel), et utilisé pour raisonner et générer du texte à partir de données d'entrée pouvant être du texte, des images ou une combinaison des deux. Il s'agit d'une unité de base de texte ou d'image. L'espace de tokens (textuels ou visuels) est donc l'espace mathématique contenant l'ensemble des unités de bases (texte ou image) pouvant être traitées par un modèle multimodal vision-langage.

Par exemple, si les prototypes sont calculés dans un espace de représentation commun défini par la méthode CLIP, ces prototypes peuvent être projetés dans un espace de tokens visuels d'un modèle vision-langage de type LlaVA pour « Large Language-and-Vision Assistant ». Ce modèle combine un grand modèle de langage avec un module visuel de type CLIP pour traiter à la fois du texte et des images.

La projection du prototype dans l'espace de tokens visuels fourni une unité d'image qui est ensuite utilisée comme contexte par le modèle multimodal vision-langage pour décrire le sous-concept sémantique, sous forme de texte compréhensible par l'humain, correspondant à cette unité d'image.

L'utilisation d'un modèle multimodal vision-langage présente l'avantage de ne pas nécessiter une liste de mots prédéfinies pour qualifier les sous-concepts sémantiques et permet ainsi d'interpréter plus précisément les prototypes déterminés à l'étape 308.

Les étapes 308,309 permettent ainsi d'interpréter les classes sémantiques obtenues via la segmentation non supervisée réalisée par le projecteur 103.

Dans une variante de réalisation de l'invention, la requête 302 est une requête multiple qui contient plusieurs concepts sémantiques distincts.

Par exemple, la requête q est implicitement définie par une union ou une intersection de plusieurs requêtes qᵢ. Dans ce cas, il suffit de remplacer le masque de segmentation M_{q} par l'intersection ou l'union des masques binaires M_{qi} de chaque requête qᵢ.

Dans le cas où les différentes requêtes ne partagent pas de sous-concepts à découvrir, on définit N_{qi} le nombre de sous-concepts à découvrir pour la requête qᵢ.

Par exemple, si deux requêtes définissent respectivement les concepts de « nourriture » et de « boisson », elles n'ont aucun sous-concept commun.

Le nombre total de sous-concepts est *N_{q} =* ∑ *N_{qi}.*

Une fonction de perte spécifique ${L}_{irr}^{{q}_{i}}$ est ajoutée pour chaque requête.

H_{qi} est un vecteur de sélection de dimension N_{q}+Nᵢᵣᵣ, dont toutes les composantes valent 1 sauf les N_{qi} termes correspondant à la requête qi qui valent 0.

Les deux types de requêtes multiples peuvent aussi être combinés.

L'invention permet ainsi de déterminer de façon automatique des sous-concepts dans une scène à partir d'un concept sémantique général défini par une requête, sans supervision des données d'entrée.

Par exemple, si le concept sémantique est « meubles », l'invention permet de segmenter une scène avec plusieurs sous-concepts associés tels que « chaises », « lits », « canapés », « tables » sans nécessité de lister ces sous-concepts au préalable. Elle permet également d'identifier la nature de ces sous concepts.

De façon générale, l'invention nécessite de pouvoir représenter les données d'une scène 3D dans deux espaces latents différents : un premier espace de représentation des données 3D qui soit spatialement précis pour pouvoir réaliser une segmentation non supervisée via le projecteur 103 et un second espace de représentation commune entre les données 3D et la requête renseignée par l'utilisateur, par exemple un espace commun images-texte. Le second espace de représentation peut avoir une précision spatiale moindre que le premier espace de représentation et sert essentiellement à faire le lien entre la scène 3D et la requête.

L'invention peut être mise en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués (*"Cloud computing*")*,* éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

L'invention peut être implémentée sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

La scène 3D segmentée peut être affichée sur un écran ou toute autre interface visuelle. Les segments de la scène peuvent être identifiés, par exemple via des couleurs différentes, pour aider l'utilisateur à les identifier.

L'invention trouve application notamment dans l'analyse automatique de scènes 3D mais aussi dans la robotique autonome pour localiser des éléments dans une scène à partir d'une requête afin de guider les actions du robot.

### Références

[1] Maggio, Dominic, Chang, Yun, Hughes, Nathan, Trang, Matthew, Griffith, Dan et al. 2024. "Clio: Real-Time Task-Driven Open-Set 3D Scene Graphs." IEEE Robotics and Automation Letters, 9 (10).
[2] Li, B., Weinberger, K. Q., Belongie, S., Koltun, V., & Ranftl, R. (2022). Language-driven semantic segmentation. arXiv preprint arXiv:2201.03546.
[3] Lan, M., Wang, X., Ke, Y., Xu, J., Feng, L., & Zhang, W. (2023). Smooseg: smoothness prior for unsupervised semantic segmentation. Advances in Neural Information Processing Systems, 36, 11353-11373.
[4] Zhou, T., Wang, W., Konukoglu, E., & Van Gool, L. (2022). Rethinking semantic segmentation: A prototype view. In Proceedings of the IEEE/CVF Conference on Computer Vision and Pattern Recognition (pp. 2582-2593).
[5] Mathilde Caron, Hugo Touvron, Ishan Misra, Hervé Jégou, Julien Mairal, Piotr Bojanowski, and Armand Joulin. Emerging properties in self-supervised vision transformers. In Proceedings of the IEEE/CVF international conference on computer vision, pages 9650-9660, 2021.
[6] Alec Radford, Jong Wook Kim, Chris Hallacy, Aditya Ramesh, Gabriel Goh, Sandhini Agarwal, Girish Sastry, Amanda Askell, PamelaMishkin, Jack Clark, et al. Learning transferable visual models from natural language supervision. In International conference on machine learning, pages 776 8748-8763. PMLR, 2021.
[7] OpenSeg :Golnaz Ghiasi, Xiuye Gu, Yin Cui, and Tsung-Yi Lin. Scaling Open-Vocabulary Image Segmentation with Image-Level Labels. In European Conference on Computer Vision (ECCV), 2022
[8] Kirillov, A., Mintun, E., Ravi, N., Mao, H., Rolland, C., Gustafson, L., ... & Girshick, R. (2023). Segment anything. In Proceedings of the IEEE/CVF International Conference on Computer Vision (pp. 4015-4026).
[9] SigLIP : Zhai, Xiaohua, et al. "Sigmoid loss for language image pretraining." Proceedings of the IEEE/CVF International Conference on Computer Vision. 2023.
[10] ImageBind : Girdhar, Rohit, et al. "Imagebind: One embedding space to bind them all." Proceedings of the IEEE/CVF Conference on Computer Vision and Pattern Recognition. 2023.
[11] Oquab, M., Darcet, T., Moutakanni, T., Vo, H., Szafraniec, M., Khalidov, V., ... & Bojanowski, P. (2023). Dinov2: Learning robust visual features without supervision. Transactions on Machine Learning Research (2023).
[12] Peng, S., Genova, K., Jiang, C., Tagliasacchi, A., Pollefeys, M., & Funkhouser, T. (2023). Openscene: 3d scene understanding with open vocabularies. In Proceedings of the IEEE/CVF conference on computer vision and pattern recognition (pp. 815-824).
[13] Ye, J., Wang, N., & Wang, X. (2023). Featurenerf: Learning generalizable nerfs by distilling foundation models. In Proceedings of the IEEE/CVF International Conference on Computer Vision (pp. 8962-8973).
[14] Sun, S., Zhang, Z., Huang, B., Lei, P., Su, J., Pan, S., & Cao, J. (2021). Sparse-softmax: A simpler and faster alternative softmax transformation. arXiv preprint arXiv:2112.12433*.*
[15] Liang, X., Wang, X., Lei, Z., Liao, S., & Li, S. Z. (2017, October). Soft-margin softmax for deep classification. In International Conference on Neural Information Processing (pp. 413-421). Cham: Springer International Publishing.
[16] Banerjee, K., Gupta, R. R., Vyas, K., & Mishra, B. (2020). Exploring alternatives to softmax function. arXiv preprint arXiv:2011.11538*.*
[17] Ester, H.-P. Kriegel, J. Sander, and X. Xu, "A density-based algorithm for discovering clusters in large spatial databases with noise," in Proceedings of the 2nd International Conference on Knowledge Discovery and Data mining, 1996, pp. 226-231
[18] Mihael Ankerst; Markus M. Breunig; Hans-Peter Kriegel; Jörg Sander (1999). OPTICS: Ordering Points To Identify the Clustering Structure. ACM SIGMOD international conference on Management of data. ACM Press. pp. 49-60.
[19] McInnes, L., Healy, J., & Astels, S. (2017). hdbscan: Hierarchical density based clustering. J. Open Source Softw., 2(11), 205.

## Revendications

1. Méthode, mise en œuvre par ordinateur, de découverte automatique de sous-concepts sémantiques dans une scène, la méthode comprenant les étapes de :
- Recevoir (301) un ensemble de données représentant au moins une scène,
- Recevoir (302) au moins une requête définissant au moins un concept sémantique à rechercher dans l'au moins une scène,
- Recevoir (307) une représentation desdites données dans un premier espace de représentation commun aux données et à l'au moins une requête,
- Pour chaque requête, déterminer (305), dans le premier espace de représentation commun, une première segmentation de l'au moins une scène supervisée à partir de l'au moins un concept sémantique de manière à définir au moins un segment non pertinent comprenant les données n'appartenant pas au concept sémantique,
- Entrainer (306) un projecteur à transformer (303) les données dudit ensemble vers un second espace de représentation sémantique de manière à réaliser une seconde segmentation des données vers un ensemble de plusieurs segments comprenant l'au moins un segment non pertinent et plusieurs segments définissant des sous-concepts de l'au moins un concept sémantique,
- L'entrainement du projecteur pour l'au moins un segment comprenant les données n'appartenant pas au concept sémantique étant réalisé de façon supervisée à partir de la première segmentation.

2. Méthode de découverte automatique de sous-concepts sémantiques selon la revendication 1 dans laquelle l'entrainement (306) du projecteur pour les segments définissant des sous-concepts est réalisé, de façon non supervisée, via l'optimisation d'une première fonction de perte définie de sorte à ce que le projecteur renforce la cohérence sémantique entre les données.

3. Méthode de découverte automatique de sous-concepts sémantiques selon l'une quelconque des revendications précédentes dans laquelle l'entrainement du projecteur (306) pour l'au moins un segment comprenant les données n'appartenant pas au concept sémantique est réalisé via l'optimisation d'une seconde fonction de perte définie de sorte à encourager la probabilité d'appartenance audit au moins un segment en fonction de la première segmentation.

4. Méthode de découverte automatique de sous-concepts sémantiques selon l'une quelconque des revendications précédentes comprenant en outre la détermination itérative (305) des centroïdes de chaque segment, appelés prototypes, à partir des valeurs des données projetées dans le second espace de représentation sémantique et leurs probabilités d'appartenance (304) à chaque segment.

5. Méthode de découverte automatique de sous-concepts sémantiques selon la revendication 4 comprenant en outre la détermination itérative (308) de prototypes dans le premier espace de représentation commun à partir des valeurs des données transformées dans le premier espace de représentation et leurs probabilités d'appartenance à chaque segment.

6. Méthode de découverte automatique de sous-concepts sémantiques selon la revendication 5 comprenant une étape de conversion (309) des prototypes déterminés dans le premier espace de représentation commun en identifiants de sous-concepts sémantiques.

7. Méthode de découverte automatique de sous-concepts sémantiques selon la revendication 6 dans laquelle l'étape de conversion (309) des prototypes en identifiants de sous-concepts sémantiques comprend les sous-étapes de
- Projeter les prototypes dans un espace d'unités d'image d'un modèle multimodal vision-langage pour obtenir une unité d'image,
- Convertir l'unité d'image en un texte caractérisant le sous-concept sémantique à l'aide du modèle multimodal vision-langage.

8. Méthode de découverte automatique de sous-concepts sémantiques selon l'une quelconque des revendications 4 à 7 dans laquelle la détermination itérative des centroïdes (305,308) de chaque segment est réalisée au moyen des sous-étapes itératives de :
- Initialiser les valeurs des centroïdes,
- Pour un sous-ensemble des données, déterminer (304) pour chaque donnée du sous-ensemble sa probabilité d'appartenance à chaque segment,
- Associer la donnée au segment ayant la probabilité d'appartenance la plus élevée,
- Mettre à jour (305) la valeur des centroïdes de chaque segment à partir d'une nouvelle valeur de centroïde calculée comme la moyenne des valeurs des données appartenant audit segment, pondérées par leurs probabilités d'appartenance audit segment.

9. Méthode de découverte automatique de sous-concepts sémantiques selon la revendication 8 dans laquelle la valeur d'un centroïde d'un segment est mise à jour (305) à partir d'une moyenne mobile exponentielle de la nouvelle valeur de centroïde.

10. Méthode de découverte automatique de sous-concepts sémantiques selon l'une quelconque des revendications 4 à 9 dans laquelle la probabilité d'appartenance à un segment d'une donnée projetée dans le second espace de représentation sémantique est calculée (304) à partir du produit entre la donnée projetée et la valeur du centroïde dudit segment.

11. Méthode de découverte automatique de sous-concepts sémantiques selon l'une quelconque des revendications précédentes dans laquelle l'au moins une requête est définie selon au moins une modalité parmi : une modalité textuelle, visuelle, audio ou une information de température.

12. Méthode de découverte automatique de sous-concepts sémantiques selon l'une quelconque des revendications précédentes dans lequel les données représentant au moins une scène sont sous forme de représentation 3D ou d'images 2D.

13. Méthode de découverte automatique de sous-concepts sémantiques selon la revendication 12 dans laquelle les données représentant au moins une scène comprennent en outre une information de température pour au moins une zone de la scène.

14. Programme d'ordinateur comportant des instructions pour l'exécution de la méthode selon l'une quelconque des revendications 1 à 13, lorsque le programme est exécuté par un processeur.

15. Support d'enregistrement lisible par un processeur sur lequel est enregistré un programme comportant des instructions pour l'exécution de la méthode selon l'une quelconque des revendications 1 à 13, lorsque le programme est exécuté par un processeur.
